# FASCICULE DE BREVET EUROPEEN

(11) **EP 0 521 789 B1**
(45) Date de publication et mention de la délivrance du brevet: **20.12.1995**
(21) Numéro de dépôt: 92401887.2
(22) Date de dépôt: 02.07.1992
(51) Int. Cl.: F16C 19/52, G01P 3/44

(54) **Ensemble capteur étanche intégrable dans un roulement à capteur d'informations et roulement équipé d'un tel ensemble**
Dichte Messfühlereinheit zum Einbau in ein Lager und Lager mit einer derart ausgestatteten Einheit
Sealed sensor unit for installation in a bearing and bearing equipped with such a unit

(30) Priorité: 05.07.1991 FR 9108464
(43) Date de publication de la demande: 07.01.1993
(73) Titulaire: SKF FRANCE, F-92142 Clamart Cédex (FR)
(72) Inventeur: Caillaut, Claude, F-37390 Saint-Roch (FR); Houdayer, Christophe, F-37000 Tours (FR)
(74) Mandataire: Casalonga, Axel

(56) Documents cités:
- FR-A- 2 558 223
- FR-A- 2 574 501
- FR-A- 2 642 483
- FR-A- 2 655 735

## Description

La présente invention concerne un ensemble capteur destiné à équiper des roulements à capteur d'informations notamment pour moyeux de roues de véhicules équipés d'un système de freinage anti-blocage ou ABS.

On connaît déjà de nombreux roulements à capteur d'informations permettant de fournir des informations relatives à des caractéristiques de rotation de la partie tournante du roulement, ladite partie tournante étant rendue solidaire d'un organe tournant.

En particulier, la demande de brevet français FR-A-2 640 706 montre un roulement à capteur d'informations dont la bague fixe possède une gorge de montage pour un bloc capteur. Un élément codeur est emmanché sur la bague tournante et s'étend dans l'espace radial entre les bagues tournante et non tournante de façon à ce que le capteur d'informations se trouve en regard axialement de l'élément codeur avec un faible entrefer. Un tel roulement présente un enconbrement axial important puisque l'élément capteur se trouve déporté axialement à l'extérieur du roulement, ce qui cause un inconvénient supplémentaire de ne pas pouvoir assurer l'étanchéité du capteur vis-à-vis de l'extérieur pour éviter des risques de pollution et disfonctionnement du capteur par pénétration de corps étrangers. En outre, un usinage spécial est nécessaire sur la bague non tournante du roulement afin d'assurer la fixation du capteur.

On connaît également par la demande de brevet français FR-A-2 642 483 un joint d'étanchéité tournant à codeur magnétique intégré pour des roulements à capteur d'informations. Ce document prévoit une protection efficace du capteur vis-à-vis du milieu extérieur et intérieur en l'enfermant dans une enceinte étanche au moyen de lèvres d'étanchéité. Cependant, la conception particulière du joint d'étanchéité implique une mise en place délicate de l'élément codeur due à la présence d'une lèvre d'étanchéité en caoutchouc sur la face frontale du support de l'élément codeur, car un emmanchement direct à la presse risque d'endommager la partie en caoutchouc. De plus, la technique nécessite également un usinage des bagues de roulement afin d'obtenir des surfaces de butée axiale sur les bagues pour positionner l'élément codeur axialement avec précision.

Récemment, la demanderesse a mis au point une technique particulière consistant à intégrer un élément capteur, sous forme de feuille mince souple pourvue d'un circuit conducteur, dans un bloc capteur annulaire en matière plastique et muni d'une pièce métallique annulaire. La pièce métallique forme le support de l'élément capteur et peut éventuellement constituer un insert pour emmancher axialement le bloc capteur sur la bague fixe d'un roulement. Cette technique a fait l'objet de la demande de brevet français FR-A-2 655 735, mais on peut remarquer que le bloc capteur est déporté axialement par rapport au roulement. L'encombrement axial ainsi créé peut constituer une contrainte dans la pratique.

Le document FR-A-2 574 501 montre dans sa figure 6 un capteur d'informations selon le préambule de la revendication 1.

L'objet de la présente invention est de pallier les inconvénients des techniques classiques grâce à un ensemble capteur de structure simple, peu encombrant et dont la mise en place dans un roulement ne nécessite pas d'usinage spécial des bagues du roulement.

L'invention a également pour objet d'assurer l'étanchéité du capteur d'informations vis-à-vis du milieu extérieur.

Un autre objet de l'invention est d'offrir un montage facile et précis de l'ensemble capteur pour roulement.

Un capteur d'informations selon l'invention est défini dans la revendication 1 et un roulement avec un tel capteur d'informations dans la revendication 13.

L'ensemble capteur, selon l'invention, est intégrable dans un roulement à capteur d'informations. L'ensemble comprend une partie annulaire porte-capteur contenant le capteur proprement dit et venant se monter sur une surface cylindrique correspondante de la bague non tournante du roulement, une partie annulaire de support d'étanchéité concentrique et décalée axialement par rapport à la partie porte-capteur de façon à pouvoir supporter un joint d'étanchéité.

La partie annulaire porte-capteur se trouve de préférence entièrement dans l'espace annulaire entre les bagues tournante et non tournante du roulement qui peut être délimité axialement soit par le plan radial d'une face d'extrémité de la bague qui a une portée axiale plus grande que l'autre bague, soit par le plan radial commun aux faces d'extrémité correspondantes des bagues du roulement. En position emmanchée, le capteur, l'élément codeur associé et le joint d'étanchéité se situent tous dans ledit espace annulaire du roulement, ce qui rend l'ensemble capteur très compact axialement.

De préférence, la partie annulaire porte-capteur présente une portée cylindrique d'emmanchement munie d'un insert métallique tubulaire qui vient s'emmancher sur la bague non tournante du roulement. En effet, l'ensemble capteur est réalisé en un seul bloc formé essentiellement d'une matière plastique. L'insert métallique tubulaire permet d'éviter un emmanchement direct du plastique sur la bague non tournante en acier afin de supprimer tout risque d'endommagement du plastique et de variations dimensionnelles du plastique avec la température ou l'humidité.

Selon l'invention, la partie annulaire porte-capteur présente une face d'appui plane servant de portée d'appui pour un outil d'emmanchement lors du montage et de face de référence pour le positionnement axial de l'ensemble capteur par rapport à l'une des faces du roulement.

Le joint d'étanchéité est de préférence fixé axialement sur la partie annulaire de support d'étanchéité par l'intermédiaire d'une armature métallique annulaire qui présente un coude sur lequel sont surmoulées des lèvres d'étanchéité. De préférence, l'élément codeur coopérant avec le capteur pour délivrer des informations relatives à la rotation de la bague tournante du roulement est rendu solidaire de ladite bague tournante par l'intermédiaire d'un flasque, le flasque de support d'élément codeur présentant une portée tubulaire d'emmanchement sur la bague tournante et un collet radial sur lequel est monté l'élément codeur. La lèvre d'étanchéité peut présenter deux points de contact avec le flasque de support d'élément codeur, l'un sur la portée tubulaire du flasque et l'autre sur le collet radial du flasque.

Le fait de rendre fixe le joint d'étanchéité permet de s'affranchir des phénomènes parasites liés aux déformations au niveau des lèvres d'étanchéité dues à la force centrifuge et affectant l'étanchéité lorsque la vitesse de rotation de la bague tournante est importante. L'invention permet la fabrication séparée des joints d'étanchéité et l'intégration de ces joints à l'ensemble capteur soit par surmoulage lors du moulage proprement dit de l'ensemble capteur en un seul bloc, soit par insertion axiale de l'armature du joint dans une rainure circulaire axiale prévue dans le bloc plastique de l'ensemble capteur, la solidarisation entre l'armature et le bloc plastique pouvant être réalisée par collage, emmanchement, avec un verrouillage mécanique en rotation assuré par au moins un ergot pratiqué au fond de la rainure circulaire et coopérant avec au moins une encoche axiale pratiquée sur une extrémité de l'armature.

L'assemblage par insertion axiale de l'armature du joint d'étanchéité dans une rainure circulaire du bloc capteur est particulièrement intéressant dans la mesure où il rend possible l'utilisation des joints d'étanchéité dont la forme et l'encombrement sont tels que la mise en place dudit joint dans le moule en vue du surmoulage du bloc capteur s'avèrerait problématique. Cette solution permet en outre de mieux délimiter les responsabilités des fabricants des éléments par spécialité et d'éviter des transports multiples d'éléments entre sous traitants, ce qui a une incidence bénéfique sur les coûts de fabrication, les délais d'approvisionnement et la qualité.

Avantageusement, la partie annulaire de support d'étanchéité forme, avec une extrémité de la bague tournante du roulement, un second joint d'étanchéité qui peut consister en un passage étroit, un joint labyrinthe ou une lèvre d'étanchéité faisant partie de la partie annulaire de support d'étanchéité.

L'ensemble capteur peut comporter un organe de connexion sous forme d'une tige qui se termine par une tête de connexion permettant le branchement de l'ensemble capteur avec une unité de traitement du signal équipant le véhicule.

Grâce à l'invention, il est possible de réaliser des ensembles capteurs sous forme d'un bloc très simple pouvant être monté par un simple emmanchement sur un roulement ordinaire sans nécessiter aucun usinage spécifique de ce dernier. De même, l'invention permet de concevoir un support d'élément codeur également simple pouvant être monté sur la bague tournante d'un roulement par simple emmanchement sans nécessiter un usinage particulier de la bague tournante du roulement. L'élément codeur peut être positionné axialement avec précision en amenant l'outil d'emmanchement en butée contre une face de référence du roulement. Après montage de l'ensemble capteur dans la partie fixe du roulement, on peut mettre en place un élément de verrouillage axial, tel qu'un circlips, constituant une butée axiale pour la face de la bague non tournante supportant le bloc capteur.

La technique de l'invention peut être appliquée à tout type de capteurs et d'éléments codeurs, puisqu'elle porte essentiellement sur des critères mécaniques de l'ensemble capteur, de l'élément codeur et du roulement.

L'invention sera mieux comprise à l'étude de la description détaillée de quelques modes de réalisation pris à titre nullement limitatif et illustrés par des dessins annexés, sur lesquels :
la figure 1 est une vue d'ensemble en coupe axiale d'un moyeu de roue équipé d'un roulement à capteur d'informations selon l'invention;
la figure 2 est une vue axiale de l'ensemble capteur équipant le roulement de la figure 1;
la figure 3 est une vue de détail du roulement à capteur d'informations de la figure 1;
la figure 4 est une vue de détail du roulement selon un autre mode de réalisation de l'invention;
la figure 5 est une vue de détail en coupe suivant V-V de l'ensemble capteur de la figure 2;
la figure 6 est une vue de détail du roulement à capteur d'informations selon un autre mode de réalisation de l'invention;
la figure 7 est une vue de détail du roulement selon un autre mode de réalisation de l'invention;
la figure 8 est une vue de détail du roulement selon un autre mode de réalisation de l'invention;
la figure 9 est une vue de détail du roulement selon un autre mode de réalisation de l'invention;
la figure 10 est une vue de détail du roulement selon un autre mode de réalisation de l'invention;
la figure 11 est une vue de détail du roulement selon un autre mode de réalisation de l'invention;
la figure 12 est une vue de détail du roulement selon un autre mode de réalisation de l'invention.

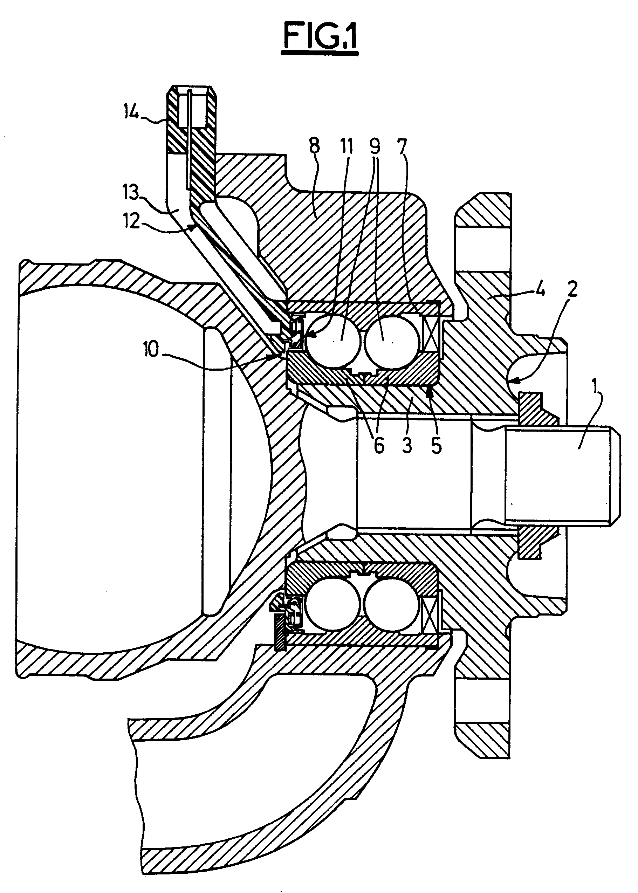

Sur la figure 1 est montrée une application particulière de l'invention à un moyeu de roue pour véhicules automobiles. Le moyeu comprend un axe rotatif 1 sur lequel est monté solidaire en rotation un élément tournant 2 présentant une portée tubulaire 3 et un flanc radial 4 sur lequel sont montés une roue et un disque ou tambour de frein (non représentés). Autour de la portée tubulaire 3 de l'élément tournant 2 est monté un roulement 5 à capteur d'infomations dont les bagues intérieures 6 sont montées solidaires de l'élément tournant 2 et dont la bague extérieure 7 est montée solidaire d'une partie fixe 8 du véhicule. Deux rangées de billes de roulement 9 disposées entre les bagues intérieures tournantes 6 et la bague extérieure fixe 7 assurent le fonctionnement normal du roulement 5. Sur un côté du roulement 5 à l'opposé du flanc radial 4 de l'élément tournant 2, est monté un dispositif de capteur d'informations 10 qui comprend un élément codeur 11 rendu solidaire d'une bague intérieure 6 et un ensemble capteur 12 rendu solidaire de la bague fixe 7 en vue de capter et délivrer des informations relatives à la rotation, notamment la vitesse de rotation de l'élément codeur 11, et par voie de conséquence de l'élément tournant 2 du moyeu. Pour faciliter la connexion électrique entre le capteur et une unité de traitement du signal (non représentée), l'ensemble capteur 12 présente une tige de connexion 13 se terminant par une tête de connexion 14 assurant le branchement électrique du capteur avec l'unité de traitement du signal.

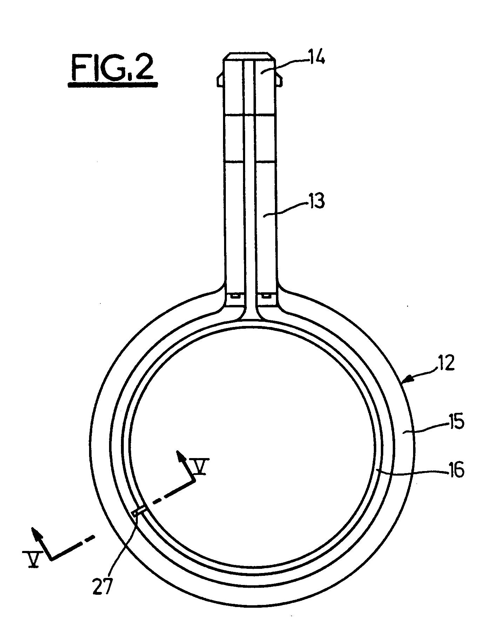

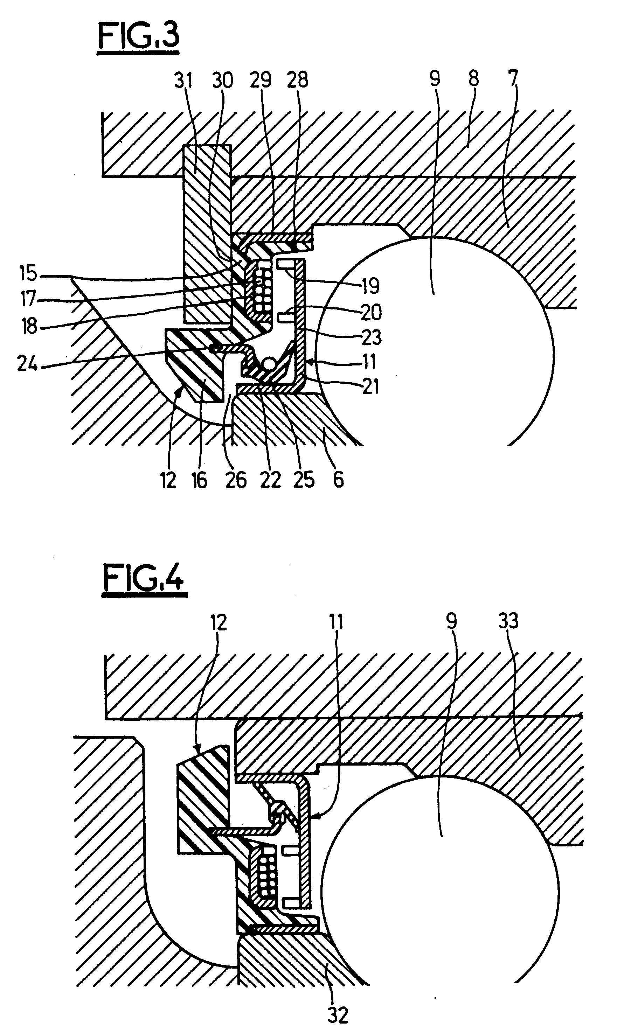

Sur la figure 2 est montré l'ensemble capteur 12 vue du côté opposé au flanc radial 4 de l'élément tournant 2 de la figure 1. L'ensemble capteur 12 est réalisé en un seul bloc par moulage de matière plastique avec notamment le capteur et un insert métallique non représenté dont le fonctionnement sera décrit à la figure 3. La connexion électrique entre le capteur (non représenté) et une unité de traitement du signal (non représentée) est réalisée au moyen de la tige de connexion 13 et de la tête de connexion 14. En relation avec la figure 1, la tige de connexion 13 peut se trouver dans un plan axial et en position inclinée par rapport à un plan radial de façon à prendre en compte les formes d'autres pièces du véhicule. La tête de connexion 14 peut être maintenue immobile par rapport à la pièce fixe 8 du véhicule.

Comme illustré sur la figure 3, l'ensemble capteur 12 comprend une partie annulaire porte-capteur 15 et une partie annulaire de support d'étanchéité 16, les parties 15 et 16 étant décalées axialement l'une de l'autre. Un capteur passif 17 sous forme d'un bobinage coopérant avec un concentrateur de flux magnétique 18 muni de dents axiales est disposé en regard axialement de l'élément codeur 11. La partie active de l'élément codeur 11 est constituée de deux anneaux multipolaires concentriques 19, 20 qui génèrent dans le concentrateur de flux 18 lors de leur rotation un champ magnétique alterné variant selon une fréquence proportionnelle à la vitesse de rotation de la bague intérieure 6. Les anneaux multipolaires 19, 20 sont rendus solidaires d'un flasque de support 21 qui comprend une portée tubulaire 22 emmanchée sur la bague intérieure tournante 6 et une partie radiale ou collet 23 sur laquelle sont montés les anneaux multipolaires 19, 20.

La partie annulaire de support d'étanchéité 16 de l'ensemble capteur 12 est déportée axialement vers l'extérieur du roulement de façon à laisser un espace pour un joint d'étanchéité. Le joint d'étanchéité comprend une armature 24 métallique présentant une partie tubulaire dont une extrémité est rendue solidaire de la partie annulaire de support d'étanchéité 16 de l'ensemble capteur et dont l'autre extrémité présente un coude radial où est montée une lèvre d'étanchéité 25 en caoutchouc par exemple. La lèvre d'étanchéité 25 coopère avec le flasque 21 de support d'élément codeur d'une part avec la portée tubulaire 22 et d'autre part avec le collet 23. Dans l'espace formé entre la lèvre d'étanchéité 25 et le fond du coude formé par le flasque 21 en L, une matière lubrifiante, telle que de la graisse peut être prévue afin de réduire l'usure et le frottement de la lèvre d'étanchéité 25 et pour renforcer l'étanchéité.

La partie annulaire de support d'étanchéité 16 de l'ensemble capteur 12 peut s'étendre radialement de façon à former un passage étroit 26 avec l'extrémité correspondante de la bague intérieure tournante 6. De cette façon, l'ensemble capteur permet de réduire le risque de pénétration des particules polluantes jusqu'au joint d'étanchéité, qui à son tour protège complètement la partie active 19, 20 de l'élément codeur 11 et le capteur 17, 18 du milieu extérieur.

En se référant de nouveau à la figure 2, la partie annulaire de support d'étanchéité 16 peut comporter une rainure axiale de drainage ou un canal de drainage 27 aménagé dans la zone dudit support qui sera située le plus bas après montage sur le roulement monté sur le véhicule, afin d'éviter une accumulation d'eau dans cette partie basse.Comme montré sur la figure 5, la rainure axiale de drainage 27 traverse axialement l'épaisseur de la partie annulaire de support d'étanchéité 16 le long de l'armature 24, nais est située dans une position diamètralement opposée à la position illustrée sur la figure 3.

On pourrait également envisager un canal de drainage sous la forme d'un simple trou traversant axialement la partie annulaire du support d'étanchéité 16.

La partie annulaire porte-capteur 15 de l'ensemble capteur présente une portée cylindrique d'emmanchement 28 comportant sur sa partie externe un insert métallique 29 pour l'emmanchement de l'ensemble capteur 12 sur la bague extérieure fixe 7 du roulement. L'insert métallique 29 sera solidarisé au bloc en matière plastique formant l'ensemble capteur 12 lors du moulage dudit bloc. L'ancrage de l'insert métallique 29 dans le bloc plastique sera réalisé par tout moyen approprié (insert avec trous radiaux, collerette crantée, déformations locales, etc.).

La partie annulaire porte-capteur 15 présente une face d'appui plane 30 dans un plan radial et servant également de face de référence pour le positionnement axial de l'ensemble capteur 12. La partie annulaire porte-capteur 15 et la partie annulaire de support d'étanchéité 16 se situent de préférence de part et d'autre du plan radial coincidant avec la face d'appui 30.

L'invention permet de simplifier grandement le montage par simple emmanchement de l'élément codeur 11 sur la bague intérieure tournante 6 et de l'ensemble capteur 12 sur la bague extérieure fixe 7. Un moyen d'immobilisation axiale, tel qu'un circlips 31, axialement solidaire de la partie fixe 8, constitue une butée axiale pour la face d'extrémité de la bague extérieure fixe 7 du roulement et pour le positionnement axial de la face d'appui 30 du bloc capteur 12. Le circlips 31 sera positionné de sorte que la tige de connexion 13 passe à travers l'ouverture circonférentielle dudit circlips.

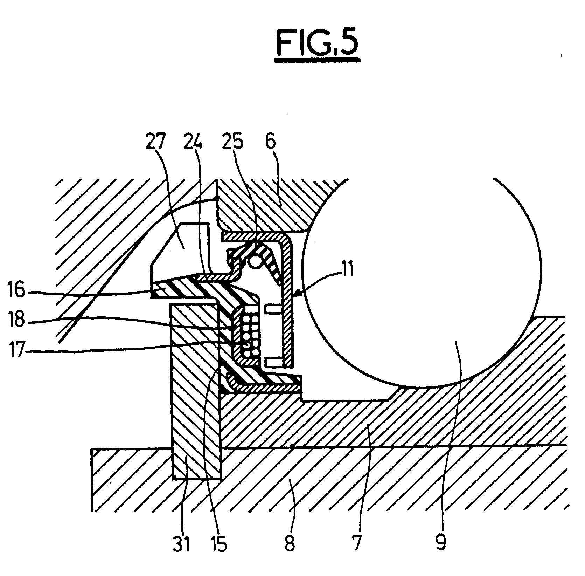

La figure 4 montre un autre mode de réalisation de l'invention avec un roulement dont les bagues intérieures 32 sont fixes et dont la bague extérieure 33 est tournante. Dans ce cas là, il suffit d'inverser la disposition de la figure 3 en emmanchant l'élément codeur 11 sur la bague extérieure tournante 33 et le bloc capteur 12 sur une bague intérieure fixe 32. La réalisation concrète ne présente aucune difficulté technique.

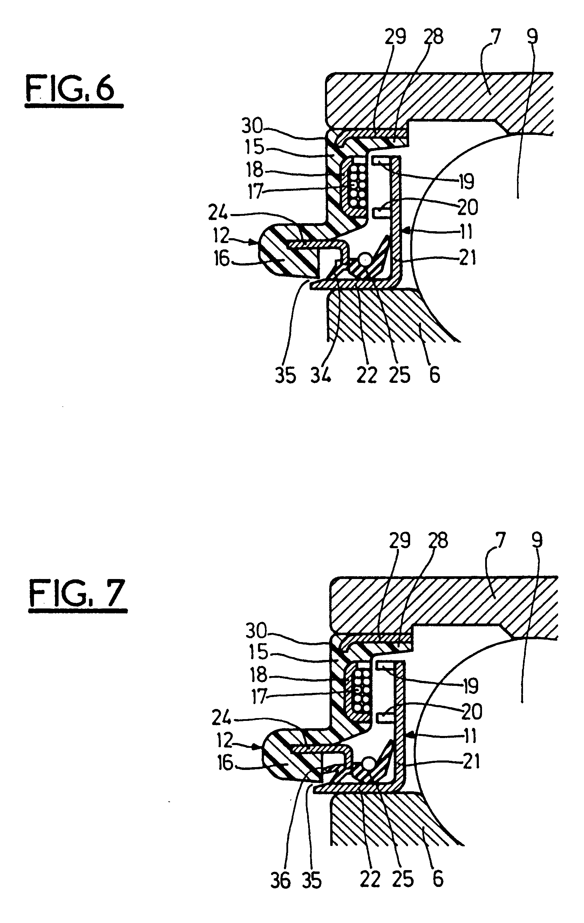

Les modes de réalisation illustrés sur les figures 6 à 12 ne diffèrent du mode représenté sur la figure 3 qu'en la conception d'un second joint d'étanchéité, ledit second joint d'étanchéité étant constitué sur la figure 3 par le passage étroit 26 entre la partie annulaire de support d'étanchéité 16 et l'extrémité de la bague tournante 6.

Sur la figure 6, le joint d'étanchéité 24, 25 présente une lèvre supplémentaire d'étanchéité 34 qui entre en contact avec la portée tubulaire 22 du flasque 21 pour assurer un rôle d'étanchéité en plus du passage annulaire 35 formé entre la partie annulaire de support d'étanchéité 16 et la portée tubulaire 22 du flasque de support 21 d'élément codeur.

Sur la figure 7, la lèvre d'étanchéité supplémentaire 36 entre en contact avec la portée tubulaire 22 du flasque 21 d'une part et avec la partie annulaire de support d'étanchéité 16 d'autre part. Comme sur la figure 6, la portée tubulaire 22 présente une extrémité qui fait saillie axialement par rapport à l'extrémité de la bague tournante 6 et se chevauche avec la partie annulaire de support d'étanchéité 16 pour former un passage annulaire étroit 35.

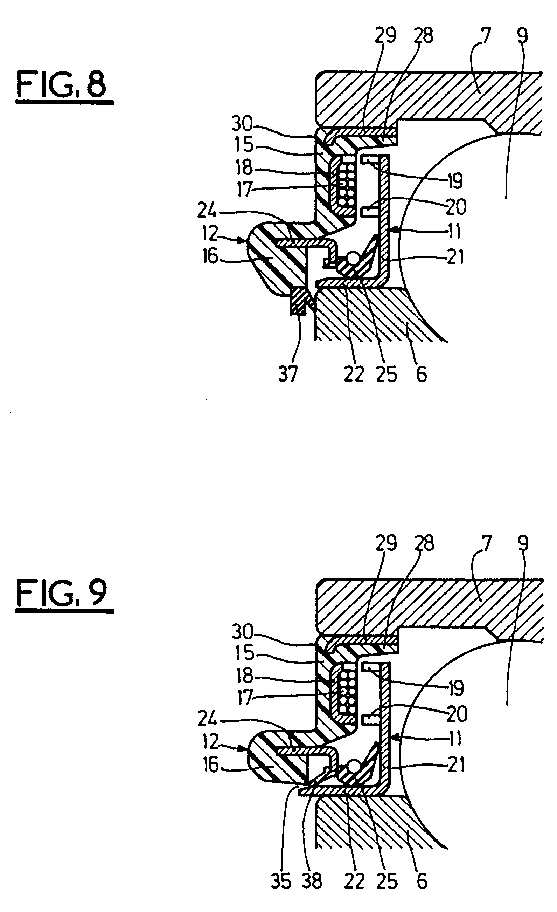

Selon la figure 8, la lèvre supplémentaire d'étanchéité 37 est rapportée sur la partie annulaire de support d'étanchéité 16 et entre en contact avec la face d'extrémité de la bague tournante 6.

Le mode illustré sur la figure 9 est sensiblement le même que celui de la figure 6. La lèvre supplémentaire d'étanchéité 38 obture le passage étroit 35 entre la partie annulaire de support d'étanchéité 16 et la partie tubulaire 22 du flasque 21.

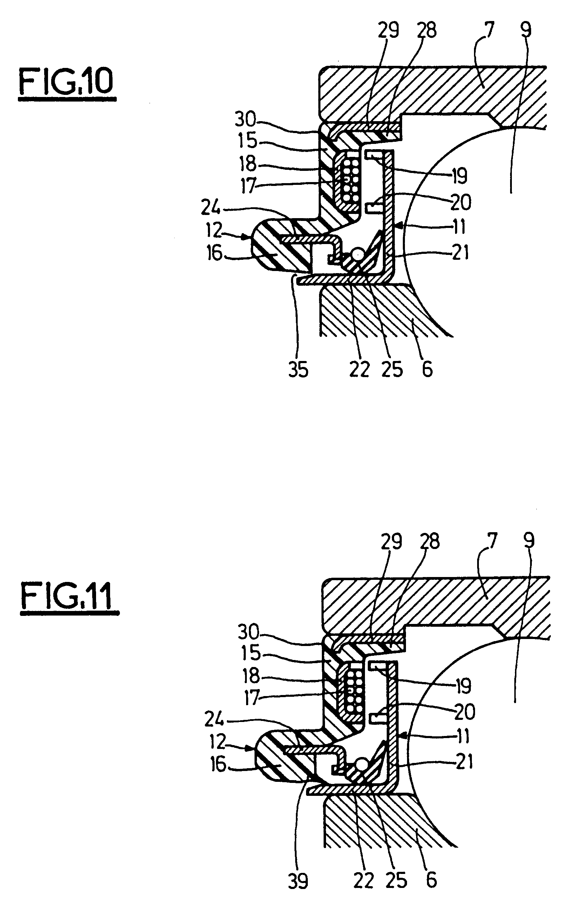

La figure 10 représente un mode sans la lèvre supplémentaire d'étanchéité. La portée tubulaire 22 du flasque 21 fait saillie axialement par rapport à la bague tournante 6 et s'étend concentriquement à l'intérieur de la partie annulaire de support d'étanchéité 16 pour former un passage étroit annulaire 35.

La figure 11 montre une variante de la figure 10 où une lèvre supplémentaire d'étanchéité 39 est issue de la partie annulaire de support d'étanchéité 16 dont elle fait partie intégrante pour entrer en contact avec la portée tubulaire 22 du flasque 21.

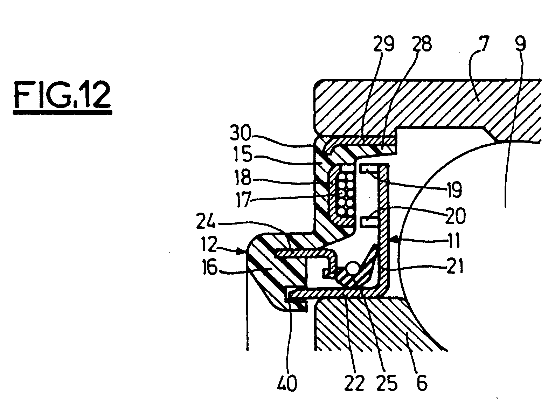

Enfin la figure 12 représente un mode où la partie annulaire de support d'étanchéité 16 présente une rainure annulaire 40 pour recevoir l'extrémité de la portée tubulaire 22 du flasque 21 en saillie axialement par rapport à la bague tournante 6, de façon à former un joint labyrinthe.

L'invention offre de nombreux avantages par rapport aux systèmes connus jusqu'à présent: aucun usinage spécial sur les bagues de roulement m'est nécessaire pour recevoir et/ou positionner l'ensemble capteur et le support d'élément codeur associé, ce qui permet l'utilisation directe des pontées d'emmanchement du roulement prévues pour recevoir un joint cartouche classique; l'encombrement de l'ensemble capteur est réduit pour laisser libres les faces des bagues du roulement sur une zone permettant leur blocage axial au moyen d'un circlips par exemple; la fabrication et le montage de l'ensemble codeur sur le roulement sont grandement simplifiés par rapport aux solutions classiques; le montage de l'élément codeur ne risque pas d'endommager les lèvres du joint d'étanchéité; le positionnement axial est précis et aisé pour l'élément codeur et l'ensemble capteur, entre eux et par rapport au roulement; l'étanchéité des parties actives de l'élément codeur et de l'ensemble capteur est assurée vis-à-vis du milieu extérieur; la tête de connexion intégrée au bloc capteur permet une connexion électrique facile du capteur avec le reste du circuit d'analyse électronique du véhicule.

## Revendications

1. Capteur d'informations intégrable dans un roulement et comprenant un élément codeur (11) pouvant être rendu solidaire de la bague tournante (6, 33) du roulement et un ensemble capteur (12) pouvant être rendu solidaire de la bague non tournante (7, 32) du roulement, réalisé en un seul bloc par surmoulage d'une matière plastique et constitué d'une part par une partie annulaire porte-capteur (15) incluant un élément capteur (17, 18) disposé en regard de l'élément codeur avec un entrefer et pouvant être monté entièrement dans l'espace annulaire entre les bagues tournante et non tournante du roulement, ladite partie porte-capteur étant pourvue d'une portée annulaire (28) d'emmanchement sur la bague non tournante du roulement et d'autre part par une partie annulaire de support d'étanchéité (16) supportant un joint d'étanchéité (24, 25), le joint d'étanchéité coopérant avec l'élément codeur (11) pour protéger de façon étanche l'élément capteur et la partie active de l'élément codeur destinés à être logés à l'intérieur dudit espace annulaire entre les bagues tournante et non tournante du roulement caractérisé par le fait que ladite partie porte-capteur est pourvue d'une face d'appui (30) plane se trouvant du côté extérieur dans un plan radial et servant également de face de référence pour le positionnement axial de l'ensemble capteur (12) dans le roulement, et ladite partie annulaire de support d'étanchéité est décalée axialement et extérieurement par rapport à ladite face d'appui de la partie porte-capteur (15).

2. Capteur d'informations selon la revendication 1, caractérisé par le fait que la portée cylindrique d'emmanchement (28) de la partie annulaire porte-capteur (15) est munie d'un insert métallique tubulaire (29) pour l'emmanchement de l'ensemble capteur (12) sur la bague non tournante (7, 32) du roulement.

3. Capteur d'informations selon la revendication 1 ou 2, caractérisé par le fait que le joint d'étanchéité comprend une armature métallique (24) de forme tubulaire dont une extrémité est rendue solidaire de la partie annulaire de support d'étanchéité (16) et dont l'autre extrémité est coudée sur laquelle est fixée une lèvre d'étanchéité (25).

4. Capteur d'informations selon la revendication 3, caractérisé par le fait que l'armature métallique (24) du joint d'étanchéité est rendue solidaire de la partie annulaire de support d'étanchéité (16) par surmoulage de la matière plastique dudit support sur ladite armature métallique (24).

5. Capteur d'informations selon la revendication 3, caractérisé par le fait que l'armature métallique (24) est pourvue d'au moins une encoche axiale sur une extrémité, et que la partie annulaire de support d'étanchéité (16) présente une rainure circulaire axiale pourvue d'au moins un ergot au fond, la coopération de l'encoche avec l'ergot assurant le verrouillage mécanique en rotation de l'armature par rapport au support d'étanchéité après montage.

6. Capteur d'informations selon l'une des revendications 3 à 5, caractérisé par le fait que l'élément codeur associé (11) comporte un flasque annulaire (21) de section en L pour supporter la partie active (19, 20) de l'élément codeur, la lèvre d'étanchéité (25) venant en contact d'une part avec la portée tubulaire (22) d'emmanchement du flasque et d'autre part avec la partie radiale (23) du flasque.

7. Capteur d'informations selon l'une des revendications précédentes, caractérisé par le fait que la partie annulaire de support d'étanchéité (16) forme un passage étroit (26) avec une extrémité de la bague tournante (6, 33) du roulement.

8. Capteur d'informations selon l'une des revendications 1 à 6, caractérisé par le fait que la partie annulaire de support d'étanchéité (16) présente une lèvre d'étanchéité (37) en contact avec une extrémité de la bague tournante du roulement.

9. Capteur d'informations selon la revendication 6, caractérisé par le fait que la partie annulaire de support d'étanchéité (16) forme un passage étroit (35) ou un joint labyrinthe (40) avec la portée tubulaire (22) d'emmanchement du flasque.

10. Capteur d'informations selon la revendication 6, caractérisé par le fait que la partie annulaire de support d'étanchéité (16) ou le joint d'étanchéité (24, 25) présente une lèvre supplémentaire d'étanchéité (34, 36, 38, 39) en contact avec la portée tubulaire (22) du flasque.

11. Capteur d'informations selon l'une des revendications précédentes, caractérisé par le fait qu'il comprend une tige de connexion (13) se terminant par une tête de connexion (14) pour assurer la liaison électrique entre l'élément capteur (17, 18) et une unité de traitement du signal .

12. Capteur d'informations selon l'une quelconque des revendications précédentes, caractérisé par le fait que dans une zone correspondant à sa partie basse après montage sur le roulement monté sur un véhicule, la partie annulaire de support d'étanchéité (16) est pourvue d'une rainure axiale de drainage (27) ou d'un canal de drainage.

13. Roulement à capteur d'informations équipé d'un capteur d'informations selon l'une quelconque des revendications précédentes.

## Claims

1. Data sensor which can be incorporated in a bearing and comprising a coder element (11) which can be made rigid with the rotating race (6, 33) of the bearing and a sensor assembly (12) which can be made rigid with the non-rotating race (7, 32) of the bearing, made as a single block by overmoulding of a plastic material and formed on the one hand by an annular sensor-holder part (15) including a sensor element (17, 18) arranged facing the coder element with an air gap and capable of being mounted entirely within the annular space between the rotating and non-rotating races of the bearing, the said sensor-holder part being provided with an annular span (28) for fitment onto the non-rotating race of the bearing and, on the other hand, by an annular leaktight carrier part (16) carrying a leaktight seal (24, 25), the leaktight seal cooperating with the coder element (11) in order to protect in a leaktight manner the sensor element and the active part of the coder element which are intended to be accommodated within the said annular space between the rotating and non-rotating races of the bearing, characterised in that the said sensor-holder part is provided with a flat support face (30) situated on the outside in a radial plane and also serving as reference face for the axial positioning of the sensor assembly (12) in the bearing, and the said annular leaktight carrier part is offset axially outwards relative to the said support face of the sensor-holder part (15).

2. Data sensor according to Claim 1, characterised in that the cylindrical fitment span (28) of the annular sensor-holder part (15) is furnished with a tubular metal insert (29) for fitting the sensor assembly (12) onto the non-rotating race (7, 32) of the bearing.

3. Data sensor according to Claim 1 or 2, characterised in that the leaktight seal comprises a metal reinforcement (24) of tubular shape, one end of which is made rigid with the annular leaktight carrier part (16) and the other end of which is bent, onto which is fixed a leaktight lip (25).

4. Data sensor according to Claim 3, characterised in that metal reinforcement (24) of the leaktight seal is made rigid with the annular leaktight carrier part (16) by moulding the plastic material of the said carrier over the said metal reinforcement (24).

5. Data sensor according to Claim 3, characterised in that the metal reinforcement (24) is provided with at least one axial notch on one end, and in that the annular leaktight carrier part (16) has an axial circular groove provided with at least one pin at the bottom, the co-operation of the slot with the pin ensuring the mechanical rotational interlocking of the reinforcement relative to the leaktight carrier after mounting.

6. Data sensor according to one of Claims 3 to 5, characterised in that the associated coder element (11) includes an annular L-section flange (21) for carrying the active part (19, 20) of the coder element, the leaktight lip (25) coming into contact on the one hand with the tubular span (22) for fitment of the flange and on the other hand with the radial part (23) of the flange.

7. Data sensor according to one of the preceding claims, characterised in that the annular leaktight carrier part (16) forms a narrow passage (26) with one end of the rotating race (6, 33) of the bearing.

8. Data sensor according to one of Claims 1 to 6, characterised in that the annular leaktight carrier part (16) has a leaktight lip (37) in contact with one end of the rotating race of the bearing.

9. Data sensor according to Claim 6, characterised in that the annular leaktight carrier part (16) forms a narrow passage (35) or a labyrinth seal (40) with the tubular span (22) for fitment of the flange.

10. Data sensor according to Claim 6, characterised in that the annular leaktight carrier part (16) or the leaktight seal (24, 25) has an additional leaktight lip (34, 36, 38, 39) in contact with the tubular span (22) of the flange.

11. Data sensor according to one of the preceding claims, characterised in that it comprises a connection rod (13) terminating in a connection head (14) to ensure the electrical link between the sensor element (17, 18) and a signal processing unit.

12. Data sensor according to any one of the preceding claims, characterised in that in an area corresponding to its low part after mounting on the bearing mounted on a vehicle, the annular leaktight carrier part (16) is provided with an axial drainage groove (27) or with a drainage channel.

13. Data sensor bearing equipped with a data sensor according to any one of the preceding claims.

## Patentansprüche

1. Informationssensor, der in ein Wälzlager integrierbar ist und der ein Geberelement (11), das mit dem umlaufenden Ring (6, 33) des Wälzlagers fest verbindbar ist, sowie eine Sensoranordnung (12) aufweist, die mit dem nicht umlaufenden Ring (7, 32) des Wälzlagers fest verbindbar und durch Spritzgießen einstückig aus Kunststoff hergestellt ist und einerseits ein ringförmiges Sensorträgerteil (15), das ein Sensorelement (17, 18) enthält, welches dem Geberelement mit einem Luftspalt gegenüberliegend angeordnet und vollständig in den ringförmigen Raum zwischen dem umlaufenden und dem nicht umlaufenden Ring des Wälzlagers einbaubar ist, wobei das Sensorträgerteil mit einem ringförmigen Abschnitt (28) zum Aufstecken auf den nicht umlaufenden Ring des Wälzlagers versehen ist, und andererseits ein ringförmiges Dichtungsträgerteil (16) aufweist, das eine Dichtung (24, 25) haltert, wobei die Dichtung mit dem Geberelement (11) zusammenwirkt, um das Sensorelement und den aktiven Teil des Geberelementes, welche dazu bestimmt sind, im Inneren des vorgenannten ringförmigen Raumes zwischen dem umlaufenden Ring und dem nicht umlaufenden Ring des Wälzlagers untergebracht zu werden, in abgedichteter Weise zu schützen, dadurch gekennzeichnet, daß das Sensorträgerteil mit einer flachen Anlagefläche (30) versehen ist, die auf der Außenseite in einer radialen Ebene liegt und die auch als Bezugsfläche für die axiale Positionierung der Sensoranordnung (12) in dem Wälzlager dient, und daß das ringförmige Dichtungsträgerteil gegenüber der vorgenannten Anlagefläche des Sensorträgerteils (15) axial und nach außen zu versetzt angeordnet ist.

2. Informationssensor nach Anspruch 1, dadurch gekennzeichnet, daß der zylindrische Aufsteckabschnitt (28) des ringförmigen Sensorträgerteils (15) mit einem rohrförmigen Einsatz (29) aus Metall zum Aufstecken der Sensoranordnung (12) auf den nicht umlaufenden Ring (7, 32) des Wälzlagers versehen ist.

3. Informationssensor nach Anspruch 1 oder 2, dadurch gekennzeichnet, daß die Dichtung ein rohrförmiges Halterungsteil (24) aus Metall aufweist, dessen eines Ende mit dem ringförmigen Dichtungsträgerteil (16) fest verbunden ist und dessen anderes Ende, auf welchem eine Dichtlippe (25) fest angeordnet ist, abgebogen ist.

4. Informationssensor nach Anspruch 3, dadurch gekennzeichnet, daß das metallische Halterungsteil (24) der Dichtung mit dem ringförmigen Dichtungsträgerteil (16) dadurch fest verbunden ist, daß das metallische Halterungsteil (24) mit dem Kunststoffmaterial des vorgenannten Trägers vergossen ist.

5. Informationssensor nach Anspruch 3, dadurch gekennzeichnet, daß das Halterungsteil (24) aus Metall an einem Ende mit wenigstens einer axialen Einkerbung versehen ist und daß das ringförmige Dichtungsträgerteil (16) eine umlaufende, axiale Nut aufweist, die mit wenigstens einer Nase am Boden versehen ist, wobei nach der Montage das Zusammenwirken der Einkerbung mit der Nase das Halterungsteil gegen Verdrehen gegenüber dem Dichtungsträger formschlüssig sichert.

6. Informationssensor nach einem der Ansprüche 3 bis 5, dadurch gekennzeichnet, daß das zugeordnete Geberelement (11) einen ringförmigen Flansch (21) mit L-förmigem Querschnitt aufweist, um den aktiven Teil (19, 20) des Geberelementes zu haltern, wobei die Dichtlippe (25) einerseits an dem rohrförmigen Aufsteckabschnitt (22) des Flansches und andererseits an dem radialen Teil (23) des Flansches anliegt.

7. Informationssensor nach einem der vorstehenden Ansprüche, dadurch gekennzeichnet, daß das ringförmige Dichtungsträgerteil (16) mit einem Stirnende des umlaufenden Ringes (6, 33) des Wälzlagers einen engen Durchlaß (26) bildet.

8. Informationssensor nach einem der Ansprüche 1 bis 6, dadurch gekennzeichnet, daß das ringförmige Dichtungsträgerteil (16) eine Dichtlippe (37) aufweist, die an einem Stirnende des umlaufenden Ringes des Wälzlagers anliegt.

9. Informationssensor nach Anspruch 6, dadurch gekennzeichnet, daß das ringförmige Dichtungsträgerteil (16) mit dem rohrförmigen Aufsteckabschnitt (22) des Flansches einen engen Durchlaß (35) oder eine Labyrinthdichtung (40) bildet.

10. Informationssensor nach Anspruch 6, dadurch gekennzeichnet, daß das ringförmige Dichtungsträgerteil (16) oder die Dichtung (24, 25) eine zusätzliche Dichtlippe (34, 36, 38, 39) aufweisen, die an dem rohrförmigen Abschnitt (22) des Flansches anliegt.

11. Informationssensor nach einem der vorstehenden Ansprüche, dadurch gekennzeichnet, daß er einen Anschlußschaft (13) aufweist, der in einem Anschlußkopf (14) zur Herstellung der elektrischen Verbindung zwischen dem Sensorelement (17, 18) und einer Signalverarbeitungseinheit endet.

12. Informationssensor nach einem der vorstehenden Ansprüche, dadurch gekennzeichnet, daß das ringförmige Dichtungsträgerteil (16) in einem Bereich, der nach der Montage auf dem in einem Fahrzeug eingebauten Wälzlager seinem unten liegenden Teil entspricht, mit einer axialen Entwässerungsnut (27) oder einem Entwässerungskanal versehen ist.

13. Wälzlager mit einem Informationssensor, das mit einem Informationssensor nach einem der vorstehenden Ansprüche ausgerüstet ist.
